# EUROPEAN PATENT SPECIFICATION

(11) **EP 0 634 148 B1**
(45) Date of publication and mention of the grant of the patent: **25.11.1998**
(21) Application number: 94110669.2
(22) Date of filing: 08.07.1994
(51) Int. Cl.: A61C 1/14, A61C 1/16

(54) **Dental handpiece having cover member preventing mistaken operation**
Zahnbehandlungsgerät und Schutzbedeckungshülle zur Vermeidung von Unfallgefahren
Pièce à main pour dentisterie à capuchon de sécurité

(30) Priority: 12.07.1993 JP 37958/93
(43) Date of publication of application: 18.01.1995
(73) Proprietor: Nakanishi Inc., Kanuma-shi Tochigi-ken (JP)
(72) Inventor: Ohnishi, Shingo, c/o Nakanishi Inc., Tochigi-ken (JP); Nakanishi, Takasuke, c/o Nakanishi Inc., Tochigi-ken (JP)
(74) Representative: Herrmann-Trentepohl, Werner, Dipl.-Ing.

(56) References cited:
- EP-A- 0 155 206
- EP-A- 0 322 896
- US-A- 5 158 456

## Description

### BACKGROUND OF THE INVENTION

This invention relates to a dental handpiece having the function of preventing its mistaken releasing operation.

Up to now, there has been extensively employed for dental treatment a dental handpiece having a bur, the upper part of which has a cut-out portion or a friction gripping portion to be adapted for receiving the bur by a lower split portion defining a groove. Such dental handpiece has driving means, such as an impeller or a motor driven by pneumatic pressure or electric power, water supplying means and air supplying/discharging means.

The above-mentioned driving means are designed to run a bur having a grinding distal end in rotation. For dental therapy, such a bur is selected so as to have a grinding end having the shape or size suited to the position or shape of the site being treated or to the purpose of the treatment, and is exchangeably attached to a tool head.

Such bur is attached to the tool head with the aid of a wrench or by thrusting a bur releasing member in the form of a pushbutton.

In the latter type handpiece in which a pushbutton is thrust for attaching the bur, the pushbutton is usually thrust against the force of a spring normally urging the pushbotton in the returning direction, and an elastic ring member (spring) on a rotary shaft, termed a bur tube for supporting the bur, is pushed for opening the bur resiliently supported on the elastic ring member.

With such conventional dental handpiece, if the pushbotton is thrust not so strongly that the bur becomes detached from the elastic ring member, that is if the pushbotton is mistakenly thrust with a medium force during treatment of the molar tooth, above all, during grinding of narrow sites or formation of artificial crowns, the pushbutton is brought into contact with rotating components, that is the rotary shaft or the elastic ring member, thus producing friction and generating the heat of friction in the mutually contacted components. With air turbines rotated with high revolutions, an extremely high temperature is reached instantaneously, thus presenting serious danger.

Document EP-A-0 322 896 reveals a dental handpiece comprising a head part for accommodating a dental treatment tool, a grip part coupled and secured to said head part for supporting said head part, engagement holding means rotatably mounted within said head part and adapted for engaging with and detachably holding a portion of the dental treatment tool introduced into said head part, releasing means abuttable against said engagement holding means for releasing engagement between said dental treatment tool and the engagement holding means. Even though the device according to the above mentioned document has certain advantages, the device leaves some room for an enhancement.

### SUMMARY OF THE INVENTION

In view of the above-described status of the art, it is a principal object of the present invention to provide a dental handpiece in which a bur releasing member such as a pushbotton may be prevented from being mistakenly operated during dental treatment for positively avoiding danger which might otherwise be brought about by the bur releasing member being kept in frictional contact with the rotating member.

The above and other objects of the present invention will become apparent from the following description.

According to the present invention, there is provided a dental handpiece comprising a head part for accommodating a dental treatment tool, a grip part coupled and secured to the head part for supporting the latter, engagement holding means rotatably mounted within the head part and adapted for engaging with and detachably holding a portion of the dental treatment tool introduced into the head part, releasing means abuttable against the engagement holding means for releasing engagement between the dental treatment tool and the engagement holding means, and a mistaken operation prevention cover member detachably sheathing the releasing means for preventing mistaken operation of the releasing means.

### BRIEF DESCRIPTION OF THE DRAWINGS

Fig.1 is a longitudinal cross-sectional view showing a head part of a dental handpiece shown with the bur detached from the handpiece.

Fig.2 is a schematic plan view showing an elastic ring member of the handpiece shown in Fig.1.

Fig.3 is an exploded perspective view showing essential parts of rotating components of the handpiece shown in Fig.1.

Fig.4 is a schematic partial front view showing a dental bur.

Fig.5 is a longitudinal cross-sectional view showing a head part of the dental handpiece according to the present invention shown with the dental bur attached to the dental handpiece.

Fig.6 is a schematic sectional plan view showing an elastic ring member of the dental handpiece which is in the state shown in Fig.5.

Fig.7 is a perspective view showing a mistaken operation prevention cover member attached in position on the dental handpiece according to the present invention.

### PREFERRED EMBODIMENTS OF THE INVENTION

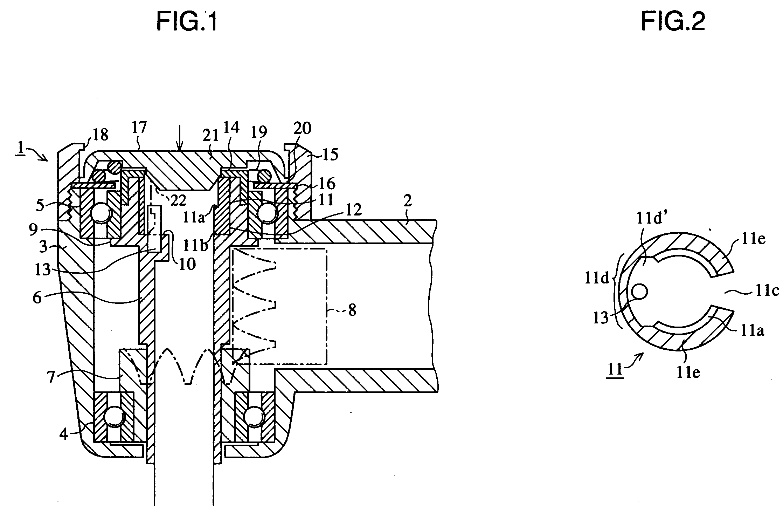

Referring to the drawings, a preferred embodiment of the present invention will be explained in detail. Fig.1 shows, in a cross-sectional view, the vicinity of a tool head of a dental handpiece. An angle-type tool head 1 is connected to a motor casing 2 of the dental handpiece as shown.

Bearings 4 and 5 are mounted between the bottom and upper end openings of a head casing 3 of the tool head 1. A head gear 7 is secured to the lower end of a bur tube 6 which is rotatably supported relative to the ball bearing 4. The head gear 7 meshes with a motor gear 8 driven by an electric motor, not shown, provided within the motor casing 2. The rotational direction of the motor gear 8 is changed at 90° to be transmitted to the head gear 7. The bur tube 6 has a larger diameter portion 9 which is larger in size than its lower portion, and which has its outer peripheral portion rotatably supported by the ball bearing 5.

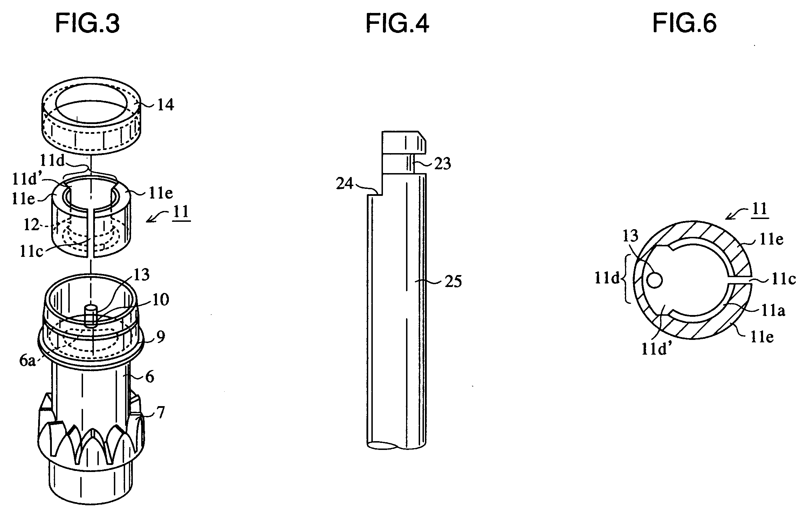

On a horizontal sliding surface 10 on the inner side of the larger diameter portion 9, there is set an elastic ring member 11 functioning as a bur engagement holding member, as shown in Figs.2 and 3. The elastic ring member 11 is made up of a split portion 11c and retention portions 11e having a spring portion 11d diametrically oppositely to the split portion 11c. The spring portion 11d is reduced in thickness as compared to the retention portions 11e by having a recessed portion 11d' formed along the inner periphery of the spring portion 11d in order to afford to the ring member 11 a spring force of perpetually diminishing the extent of the gap defined by the split portion 11c. Within the recessed portion 11d' is mounted a positioning pin 13 as later explained. The recess 11d' and the positioning pin 13 play the role of controlling displacement of the elastic ring member 11 within the bur tube 6 during rotation of the bur tube 6 in order to assure rotation of the elastic ring member 11 and the bur tube 6 in unison. In addition, the recess 11d' and the pin 13 play the role of causing the elastic ring member 11 to be opened apart uniformly with respect to the split portion 11c without distortion of the retention portions 11e. The lower inner peripheral portion of the retention portions 11e is formed with a pawl 12 extending along its inner periphery. The pawl 12 has an upper horizontal engaging surface 11a and a lower tapered surface 11b (see Fig. 1). The above-mentioned positioning pin 13 is set on the horizontal slide surface 10 which induces rotation of the elastic ring member 11 in unison with the bur tube 6 without causing distortion of the elastic ring member 11. Consequently, the elastic ring member 11 is rotated in unison with a bur 25 as later explained.

On the other hand, the positioning pin 13 plays the role of a fulcrum during the opening apart of the elastic ring member 11 as later explained and allows the retention portions 11e to be opened apart with respect to the split portion 11c without distortion, thus assuring positive mounting and dismounting of the bur 25.

Referring to Fig.3, an annular lock cover 14 having an L-shaped cross-section is adapted to overlie the upper end of the elastic ring member 11 in order to prevent the elastic ring member from being popped out or displaced upward.

On the upper outer periphery of the head casing 3 is detachably threaded a head cap 15 and a spring retention washer 16 is held between the upper outer periphery of the head casing 3 and the head cap 15. In an upper end opening 18 of the head cap 15 is slidably engaged a pushbutton type thrusting member 17 playing the part of a bur releasing member. The thrusting member 17 is perpetually biased upward by a coil spring 19 provided on the spring retention washer 16.

The thrusting member 17 has a shoulder 20 engaged with the head cap 15 for preventing the thrusting member 17 from being detached upward under the force of the coil spring 19. The lower central surface portion of the thrusting member 17 has an engagement releasing lug 21, the outer rim of which is formed as a tapered guide surface 22 facing the upper inner rim of the elastic ring member 11. In Fig.1, the elastic ring member 11 is abutted against the guide surface 22 for opening apart the elastic ring member 11 as shown in Fig.2 for disengaging the bur 25 shown in Fig.4.

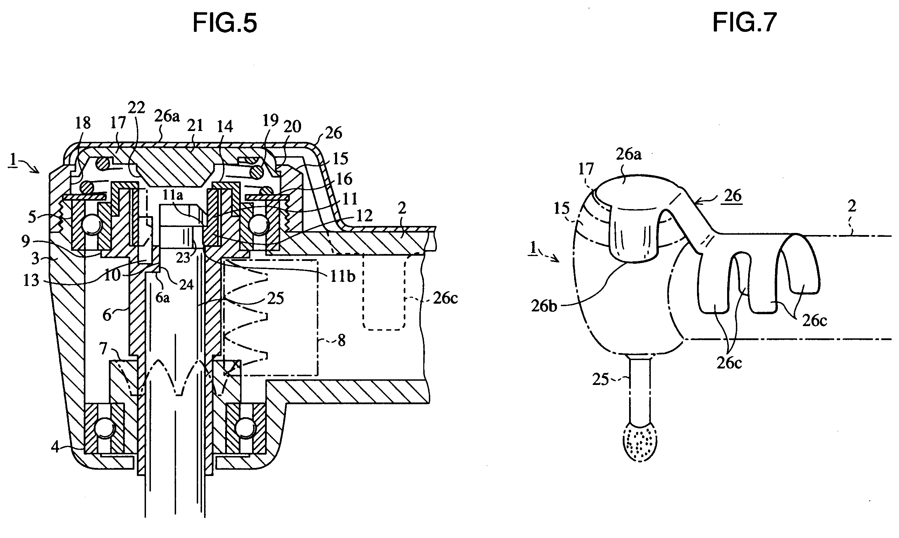

On the tool head 1 is mounted a mistaken operation prevention cover member 26 for covering the upper surface of the thrusting member 17 substantially in its entirety, as shown in Figs.5 and 7. The mistaken operation prevention cover member 26 is made up of a sheathing portion 26a for sheathing the thrusting member 17 substantially in its entirety, elastic retention tabs 26b formed integrally with the sheathing portion 26a for detachably engaging with a portion of the outer periphery of the head cap 15 and a portion of the outer periphery of the tool head 1, and elastic retention tabs 26c formed integrally with the sheathing portion 26a for detachably engaging with a portion of the outer periphery of the motor casing 2, as also shown in Fig.7.

Thus, by press-fitting the elastic retention tabs 26b, 26c of the mistaken operation prevention cover member 26 over the outer periphery of the head cap 15, the tool head 1 and the motor casing 2, such as with fingers' ends, the mistaken operation prevention cover member 26 may be mounted over the tool head 1 for overlying the thrusting member 17 to prevent external pressure from being directly applied on the thrusting member 17.

In Fig.4, there is shown the above-mentioned bur 25 having a tool, not shown, integrally with the distal end thereof. The upper outer periphery of the bur 25 has a cut-out 23 engagable with the engaging surface 11a of the elastic ring member 11. The upper outer periphery of the bur 25 also has a positioning recess 24 engagable by a positioning surface 6a (see Fig.3) formed on the inner surface of the bur tube 6 for suppressing rotation and upward shifting of the bur 25 within the bur tube 6.

For loading such bur 25 into the tool head 1, the bur 25 is introduced at the lower end of the bur tube 6, with the upper end of the bur 25 first, and is further pushed into the inside of the bur tube 6 until the recess 24 is caused to bear against the positioning surface 6a of the bur tube 6.

The upper periphery of the bur 25 is caused to bear at this time against the tapered surface 11b of the elastic ring member 11 for opening the ring member apart, as shown in Figs.1 and 2. When the cut-out 23 reaches the pawl 12, the latter is caused to descend into the cut-out 23 for engagement therewith under the force of the spring portion 11d of the elastic ring member 11, until the state shown in Fig.5 is reached.

At this time, the positioning pin 13 prevents the elastic ring member 11 from being opened apart and thereby deformed, as shown in Fig.6. In such state, the bur 25 cannot be detached from the bur tube 6 and is rotated along with the bur tube 6 under driving by the electric motor, not shown.

After mounting the bur 25 in position in this manner, the retention tabs 26b, 26c may be press-fitted on the outer peripheries of the tool head 1 and the motor casing 2 for attaching the mistaken operation prevention cover member 26 on the main handpiece member. At this time, the cover sheathing portion 26a sheathes the upper portion of the thrusting member 17 in order to prevent any mistaken operation of the thrusting member 17. The handpiece then may be used for dental treatment.

For extracting the bur 25 from the tool head 1, the retention tabs 26b, 26c holding the outer peripheries of the head cap 15 and the motor casing 2 are detached therefrom by manipulation with the fingers' ends for unsheathing the thrusting member 17 by the cover sheathing portion 26a. The thrusting member 17 is pressed down with the fingers' end against the force of coil the spring 19. The guide surface 22 of the lug 21 acts for outwardly opening the upper inner rim portion of the elastic ring member 11, as the guide surface 22 has a sliding contact with the upper inner rim portion, as shown in Fig.1. This causes the pawl 12 to be disengaged from the cut-out 23. As a result, the bur 25 is free to be moved downward within the bur tube 6 so that it may be extracted easily. The bur exchange operation may now be carried out easily and expeditiously.

During dental treatment, such as treatment of the molar tooth, cutting of a strait site or formation of an artificial crown, the thrusting member, as a bur releasing member, may be safeguarded against inadvertent touch by the finger's end, by simply mounting the mistaken operation prevention cover member on the tool head. Thus, it becomes possible to prevent generation of the heat of friction due to contact of the bur releasing member with the rotating members caused by mistaken operation of the thrusting member, and any resulting various accidents or danger.

## Claims

1. A dental handpiece comprising
a head part (1) for accommodating a dental treatment tool (25),
a grip part (2) coupled and secured to said head part (1) for supporting said head part (1),
engagement holding means (11) rotatably mounted within said head part (1) and adapted for engaging with and detachably holding a portion (23) of the dental treatment tool (25) introduced into said head part (1),
releasing means (17) abuttable against said engagement holding means (11) for releasing engagement between said dental treatment tool (25) and the engagement holding means (11), characterized in that
a mistaken operation prevention cover member (26) is provided detachably sheathing said releasing means (17) for preventing mistaken operation of said releasing means (17).

2. The dental handpiece as claimed in claim 1 wherein said mistaken operation prevention cover member (26) comprises a first holding tab (26b) for resiliently holding said head part (1) and a second holding tab (26c) for resiliently holding said gripping part (2).

3. The dental handpiece as claimed in claim 1 wherein said engagement holding means (11) comprises a retention portion (11e) for engaging with said portion (23) of the dental treatment tool (25) and a spring portion (11d) for resiliently causing said retention portion (11e) to detachably hold said portion (23) of the dental treatment tool (25).

4. The dental handpiece as claimed in claim 3 wherein said releasing means (17) comprises an abutment cam (21, 22) abuttable against said retention portion (11e) of said engagement holding means (11) for releasing engagement of said retention portion (11e) with the portion (23) of said dental treatment tool (25) against the force of said spring portion (11d).

## Patentansprüche

1. Zahnbehandlungsgerät, welches umfaßt
ein Kopfteil (1) zur Aufnahme eines Zahnbehandlungswerkzeuges (25),
ein Griffteil (2), welches zum Tragen des Kopfteiles (1) mit diesem verbunden und befestigt ist,
eine Einsatz-Halteeinrichtung (11), die drehbar innerhalb des Kopfteiles (1) angeordnet und zur Aufnahme und zur lösbaren Halterung eines Abschnitts (23) des Zahnbehandlungswerkzeugs (25) ausgebildet ist, welches in das Kopfteil (1) eingeführt ist,
eine Freigabeeinrichtung (17), die gegen die Einsatz-Halteeinrichtung (11) anlegbar ist, um den Eingriff zwischen dem Zahnbehandlungswerkzeug (25) und der Einsatz-Halteeinrichtung (11) zu lösen,
**dadurch gekennzeichnet**, **daß**
ein Abdeckelement (26) zur Sicherung gegen Fehlbetrieb abnehmbar vorgesehen ist, welche die Freigabeeinrichtung (17) abschirmt, um einen Fehlgebrauch der Freigabeeinrichtung (17) zu verhindern.

2. Zahnbehandlungsgerät nach Anspruch 1, **dadurch gekennzeichnet, daß** das Abdeckelement (26) eine erste Haltezunge (26b) zur nachgiebigen Halterung des Kopfteiles (1) und eine zweite Haltezunge (26c) zur nachgiebigen Halterung des Griffteiles (2) umfaßt.

3. Zahnbehandlungsgerät nach Anspruch 1, **dadurch gekennzeichnet, daß** die Einsatz-Halteeinrichtung (11) einen Rückhalteabschnitt (11e) für den Eingriff in den Abschnitt (23) des Zahnbehandlungswerkzeugs (25) und einen Federabschnitt (11d) aufweist, der den Rückhalteabschnitt (11e) veranlaßt, den Abschnitt (23) des Zahnbehandlungswerkzeugs (25) lösbar zu halten.

4. Zahnbehandlungsgerät nach Anspruch 3, **dadurch gekennzeichnet, daß** die Freigabeeinrichtung (17) einen Anschlagteil (21, 22) aufweist, welcher gegen den Rückhalteabschnitt (11e) der Einsatz-Halteeinrichtung (11) zum Zwecke des lösbaren Eingriffs des Rückhalteabschnitts (11e) mit dem Abschnitt (23) des Zahnbehandlungswerkzeuges (25) gegen die Kraft des Federabschnitts (11d) anlegbar ist.

## Revendications

1. Pièce à main dentaire, comprenant :
une partie de tête (1) destinée à loger un outil (25) de traitement dentaire,
une partie de saisie (2) couplée et fixée à la partie de tête (1) pour le support de la partie de tête (1)
un dispositif (11) de support par coopération monté de façon rotative à l'intérieur de la partie de tête (1) et destiné à coopérer avec une portion (23) de l'outil de traitement dentaire (25) introduit dans la partie de tête (1) et à supporter temporairement cette portion, et
un dispositif (17) de libération qui peut être en butée contre le dispositif de support avec coopération (11) et destiné à supprimer la coopération entre l'outil de traitement dentaire (25) et le dispositif (11) de support par coopération, caractérisée en ce que
un organe (26) formant couvercle destiné à empêcher une manoeuvre erronée est monté afin qu'il recouvre de manière amovible par gainage le dispositif de libération (17) pour empêcher une manoeuvre erronée de ce dispositif de libération (17).

2. Pièce à main dentaire selon la revendication 1, dans laquelle l'organe (26) de couvercle destiné à empêcher une manoeuvre erronée comporte une première patte (26b) de support élastique de la partie de tête (1) et une seconde patte (26c) de support élastique de la partie de saisie (2).

3. Pièce à main dentaire selon la revendication 1, dans laquelle le dispositif (11) de support avec coopération comprend une portion de retenue (11e) destinée à coopérer avec ladite portion (23) de l'outil de traitement dentaire (25), et une partie de ressort (11d) destinée à provoquer élastiquement le support temporaire de la portion (23) de l'outil de traitement dentaire (25) par la portion de retenue (11e).

4. Pièce à main dentaire selon la revendication 3, dans laquelle le dispositif de libération (17) comprend une came de butée (21, 22) destinée à être en butée contre la portion de retenue (11e) du dispositif (11) de support de coopération destiné à supprimer la coopération de la portion de retenue (11e) avec la portion (23) de l'outil de traitement dentaire (25) malgré la force de la portion de ressort (11d).
